# EUROPEAN PATENT APPLICATION

(11) **EP 4 835 656 A1**
(43) Date of publication of application: **04.11.2026**
(21) Application number: 24910934.9
(22) Date of filing: 19.12.2024
(51) Int. Cl.: G06F 9/451

(54) **PAGE INTERACTION METHOD AND APPARATUS, DEVICE, AND STORAGE MEDIUM**

(30) Priority: 27.12.2023 CN 202311832727
(71) Applicant: Beijing Zitiao Network Technology Co., Ltd., Beijing 100190 (CN)
(72) Inventor: ZHAO, Yuxuan, Beijing 100028 (CN); MA, Ke, Beijing 100028 (CN); SHU, Siqi, Beijing 100028 (CN)
(74) Representative: Grünecker Patent- und Rechtsanwälte PartG mbB
(86) International application number: PCT/CN2024/140683
(87) International publication number: WO 2025/140005

(57) **Abstract**

The present disclosure provides a page interaction method, apparatuses, a device, and a storage medium, which relate to the field of computer technologies. The method includes: displaying a type selection page in response to an initiating operation of a virtual resource granting event input in a chat page of a target chat, where a preset type set including at least two interactive types is displayed in the type selection page, and the interactive types are associated with acquisition manners of virtual resources; displaying a virtual resource setting page in response to a selection operation for a target interactive type by a first user; receiving setting information input by the first user based on the virtual resource setting page; and displaying a first chat message sent by the first user in the target chat, where the first chat message is for a second user in the target chat to acquire a target virtual resource based on an acquisition manner associated with the target interactive type.

## Description

### CROSS-REFERENCE TO RELATED APPLICATION(S)

The present application claims priority to Chinese Patent Application No. 202311832727.1, filed on December 27, 2023, entitled "PAGE INTERACTION METHOD, AND APPARATUS, DEVICE, AND STORAGE MEDIUM", which is hereby incorporated by reference in its entirety.

### TECHNICAL FIELD

Embodiments of the present disclosure relate to the field of computer technologies, and in particular, to a page interaction method, and an apparatus, a device, and a storage medium.

### BACKGROUND

With the rapid development of information technology and the popularization of mobile Internet, users may interact based on virtual resources such as coupons or red envelopes through the Internet, such as relevant interactions of granting virtual resources and acquiring virtual resources.

### SUMMARY

Embodiments of the present disclosure provide a page interaction method, an apparatus, a device, and a storage medium.

In a first aspect, an embodiment of the present disclosure provides a page interaction method, including, on a first user side:
displaying a type selection page in response to an initiating operation of a virtual resource granting event input in a chat page of a target chat, where a preset type set is displayed in the type selection page, the preset type set includes at least two interactive types, the at least two interactive types are associated with acquisition manners of virtual resources, and the at least two interactive types include an access type and/or an image type;
displaying a virtual resource setting page corresponding to a target interactive type in response to a selection operation for the target interactive type, where the target interactive type is any interactive type in the preset type set;
receiving setting information input by the first user based on the virtual resource setting page; and
displaying a first chat message sent by the first user in the chat page, where the first chat message is for a second user in the target chat to acquire a target virtual resource based on an acquisition manner associated with the target interactive type.

In a second aspect, an embodiment of the present disclosure provides a page interaction method, including, on a second user side:
displaying a first chat message sent by a first user in a chat page of a target chat, where the first chat message is for the second user to acquire a target virtual resource based on an acquisition manner associated with a target interactive type, and the target interactive type is an access type and/or an image type;
displaying a virtual resource acquisition page in response to a trigger operation for the first chat message;
receiving target access information and/or a target image input by the second user based on the virtual resource acquisition page; and
displaying an acquisition result page of the target virtual resource in response to acquiring the target access information and/or the target image that match the acquisition manner of the target virtual resource.

In a third aspect, an embodiment of the present disclosure provides a page interaction apparatus, configured on a first user side, including:
a type selection page display module, configured to display a type selection page in response to an initiating operation of a virtual resource granting event input in a chat page of a target chat, where a preset type set is displayed in the type selection page, the preset type set includes at least two interactive types, the at least two interactive types are associated with acquisition manners of virtual resources, and the at least two interactive types include an access type and/or an image type;
a resource setting page display module, configured to display a virtual resource setting page corresponding to a target interactive type in response to a selection operation for the target interactive type, where the target interactive type is any interactive type in the preset type set;
a setting information reception module, configured to receive setting information input by the first user based on the virtual resource setting page; and
a chat message display module, configured to display a first chat message sent by the first user in the chat page, where the first chat message is for a second user in the target chat to acquire a target virtual resource based on an acquisition manner associated with the target interactive type.

In a fourth aspect, an embodiment of the present disclosure provides a page interaction apparatus, configured on a second user side, including:
a message display module, configured to display a first chat message sent by a first user in a chat page of a target chat, where the first chat message is for the second user to acquire a target virtual resource based on an acquisition manner associated with a target interactive type, and the target interactive type is an access type and/or an image type;
a resource acquisition page display module, configured to display a virtual resource acquisition page in response to a trigger operation for the first chat message;
a reception module, configured to receive target access information and/or a target image input by the second user based on the virtual resource acquisition page; and
a resource acquisition result display module, configured to display an acquisition result page of the target virtual resource in response to acquiring the target access information and/or the target image that match the acquisition manner of the target virtual resource.

In a third aspect, an embodiment of the present disclosure provides an electronic device, including:
one or more processors; and
a storage apparatus, configured to store one or more programs,
when the one or more programs are executed by the one or more processors, the one or more processors are caused to implement the page interaction method provided by the embodiments of the present disclosure.

In a fourth aspect, an embodiment of the present disclosure provides a storage medium including computer executable instructions, when the computer executable instructions are executed by a computer processor, the page interaction method provided by the embodiments of the present disclosure is executed.

### BRIEF DESCRIPTION OF THE DRAWINGS

The foregoing and other features, advantages, and aspects of the embodiments of the present disclosure become more apparent with reference to the following specific implementations and in conjunction with the drawings. Throughout the drawings, the same or similar reference numerals denote the same or similar elements. It should be understood that the drawings are schematic and that parts and elements are not necessarily drawn to scale.
Fig. 1 is a schematic flowchart of a page interaction method according to an embodiment of the present disclosure;
Fig. 2 is a schematic diagram of interface interaction in a page interaction method according to an embodiment of the present disclosure;
Fig. 3 is a schematic diagram of interface interaction in another page interaction method according to an embodiment of the present disclosure;
Fig. 4 is a schematic diagram of interface interaction in another page interaction method according to an embodiment of the present disclosure;
Fig. 5 is a schematic interface diagram of a page interaction method according to an embodiment of the present disclosure;
Fig. 6 is a schematic flowchart of another page interaction method according to an embodiment of the present disclosure;
Fig. 7 is a schematic diagram of interface interaction in another page interaction method according to an embodiment of the present disclosure;
Fig. 8 is a schematic flowchart of another page interaction method according to an embodiment of the present disclosure;
Fig. 9 is a schematic diagram of interface interaction in another page interaction method according to an embodiment of the present disclosure;
Fig. 10 is a schematic structural diagram of a page interaction apparatus according to an embodiment of the present disclosure;
Fig. 11 is a schematic structural diagram of another page interaction apparatus according to an embodiment of the present disclosure; and
Fig. 12 is a schematic structural diagram of an electronic device according to an embodiment of the present disclosure.

### DETAILED DESCRIPTION OF EMBODIMENTS

Embodiments of the present disclosure are described in more detail below with reference to the drawings. Although some embodiments of the present disclosure are shown in the drawings, it should be understood that the present disclosure may be implemented in various forms and should not be construed as being limited to the embodiments set forth herein. Instead, these embodiments are provided for a more thorough and complete understanding of the present disclosure. It should be understood that the drawings and embodiments of the present disclosure are only for illustrative purposes and are not intended to limit the protection scope of the present disclosure.

It should be understood that steps described in method implementations of the present disclosure may be performed in different orders and/or in parallel. Furthermore, the method implementations may include additional steps and/or omit performing illustrated steps. The scope of the present disclosure is not limited in this respect.

The term "include/comprise" and variations thereof used herein are open-ended inclusions, that is, "include/comprise but not limited to". The term "based on" is "at least partially based on". The term "an embodiment" means "at least one embodiment". The term "another embodiment" means "at least one other embodiment". The term "some embodiments" means "at least some embodiments". Related definitions of other terms are given in the following description.

It should be noted that concepts such as the "first" and "second" mentioned in the present disclosure are only used to distinguish different apparatuses, modules, or units, and are not used to limit an order or interdependence of functions performed by these apparatuses, modules, or units.

It should be noted that modifications of "one" and "multiple" mentioned in the present disclosure are schematic rather than restrictive, and those skilled in the art should understand that "one" or "multiple" should be understood as "one or multiple" unless otherwise clearly indicated in the context.

Names of messages or information exchanged between multiple apparatuses in the implementations of the present disclosure are only for illustrative purposes, and are not intended to limit the scope of these messages or information.

It may be understood that before the use of the technical solutions disclosed in the embodiments of the present disclosure, the user should be informed of the type, use range, use scenarios, etc., of personal information involved in the present disclosure and the authorization of the user should be obtained in an appropriate manner in accordance with relevant laws and regulations.

For example, in response to reception of an active request from a user, prompt information is sent to the user to clearly inform the user that the requested operation will require access to and use of personal information of the user. In this way, the user may independently choose, based on the prompt information, whether to provide the personal information to software or hardware, such as an electronic device, an application, a server, or a storage medium, that performs the operations of the technical solutions of the present disclosure.

As an optional but non-limiting implementation, in response to reception of the active request from the user, the manner of sending the prompt information to the user, for example, may be in a manner of a pop-up window, and the prompt information may be presented in text in the pop-up window. In addition, the pop-up window may also carry a selection control for the user to choose whether to "agree" or "disagree" to provide the personal information to the electronic device.

It may be understood that the above process of notifying and acquiring user authorization is only illustrative and does not constitute a limitation on the implementations of the present disclosure, and other manners that satisfy relevant laws and regulations may also be applied in the implementations of the present disclosure.

It may be understood that the data involved in the technical solution (including but not limited to the data itself, acquisition or use of the data) should comply with requirements of corresponding laws, regulations, and related provisions.

At present, a sending user of virtual resources may set attributes such as the number of resources and the number of acquirers in a page, and send the virtual resources to a user side that may acquire the virtual resources. An acquisition control of the virtual resources is displayed in the page of the user side that acquires the virtual resources, and the user may acquire the corresponding virtual resources by clicking the acquisition control.

According to the page interaction solution provided by the embodiments of the present disclosure, on the first user side, a type selection page is displayed in response to an initiating operation of a virtual resource granting event input in a chat page of a target chat, a preset type set including at least two interactive types is displayed in the type selection page, the interactive types are associated with acquisition manners of virtual resources, the at least two interactive types include an access type and/or an image type, a virtual resource setting page corresponding to a target interactive type is displayed in response to a selection operation for the target interactive type, setting information input by the first user is received based on the virtual resource setting page, and a first chat message sent by the first user is displayed in the target chat, where the first chat message is for a second user in the target chat to acquire a target virtual resource based on an acquisition manner associated with the target interactive type. By adopting the above technical solution, when a user wants to distribute a virtual resource in a chat, richer interactive types such as an access type or an image type based on the virtual resource may be displayed for the user to choose from, thereby enriching interaction manners based on the virtual resource between chat members and improving the interaction effect.

According to the page interaction solution provided by the embodiments of the present disclosure, on the second user side, a first chat message sent by a first user is displayed in a chat page of a target chat, where the first chat message is for the second user to acquire a target virtual resource based on an acquisition manner associated with a target interactive type, and the target interactive type is an access type and/or an image type; a virtual resource acquisition page is displayed in response to a trigger operation for the first chat message; target access information and/or a target image input by the second user are received based on the virtual resource acquisition page; and an acquisition result page of the target virtual resource is displayed in response to acquiring the target access information and/or the target image that match the acquisition manner of the target virtual resource. With the above technical solution, when a user wants to acquire a virtual resource granted by another user in a chat, the user may acquire the virtual resource by inputting access information or an image, thereby enriching interaction manners based on the virtual resource between chat members and improving the interaction effect.

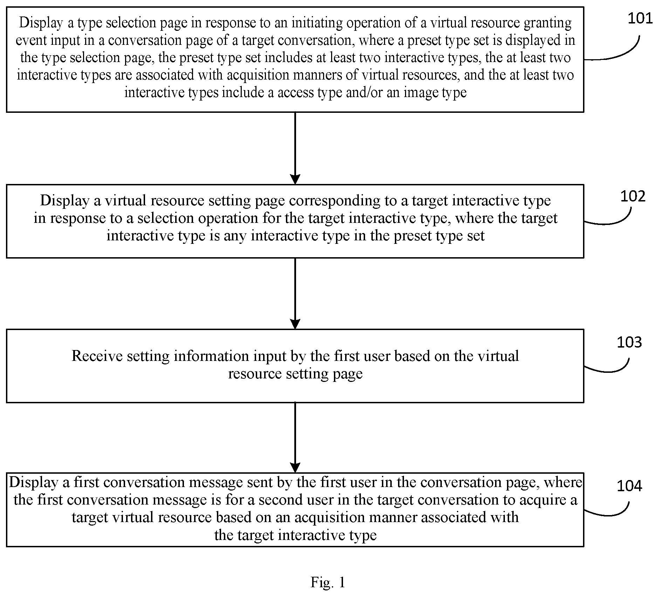

Fig. 1 is a schematic flowchart of a page interaction method according to an embodiment of the present disclosure. The embodiment of the present disclosure is applicable to a case of page interaction, and the method may be performed by a page interaction apparatus, which may be implemented in a form of software and/or hardware, and optionally, by an electronic device. The electronic device may be a mobile terminal such as a mobile phone, a smart watch, a tablet computer, or a personal digital assistant, or may be a device such as a personal computer (PC) or a server. The method is applied to a first user side, that is, the electronic device may be configured as a first user side device.

As shown in Fig. 1, the method includes:
step 101: a type selection page is displayed in response to an initiating operation of a virtual resource granting event input in a chat page of a target chat, where a preset type set is displayed in the type selection page, the preset type set includes at least two interactive types, the at least two interactive types are associated with acquisition manners of virtual resources, and the at least two interactive types include an access type and/or an image type.

In the embodiments of the present disclosure, the target chat may be a one-to-one chat or a group chat, which is not specifically limited. Participants in the target chat include the first user and the second user. The first user may be a user who currently needs to grant a virtual resource, and a number of second users is not limited and may include the first user. The virtual resource may include, for example, a red envelope or a coupon.

Exemplarily, a preset initiating control may be displayed in the chat page of the target chat, and the first user may input the initiating operation of the virtual resource granting event by triggering the preset initiating control. After the initiating operation is received, the type selection page may be displayed. The type selection page may be displayed on an upper layer of the chat page, and a size of the type selection page may be smaller than that of the chat page.

In the embodiments of the present disclosure, the preset type set is displayed in the type selection page, and the preset type set includes at least two interactive types. Specifically, names and/or icons of the interactive types in the preset type set may be displayed in the type selection page, and a display layout of the interactive types is not limited, for example, may be a list layout or a matrix layout. The at least two interactive types are associated with the acquisition manners of virtual resources, that is, different interactive types correspond to different acquisition manners of virtual resources. The at least two interactive types may include the access type and/or the image type, and may also include other interactive types, such as a message trigger type (a corresponding acquisition manner may be triggering a chat message containing a virtual resource in a manner of clicking or the like).

Optionally, the acquisition manner associated with the access type includes inputting access information. Optionally, a type of the access information includes a text information type and/or a voice information type. Specifically, an acquisition manner corresponding to the text information type may be acquiring a virtual resource by inputting an access in a form of text information; an acquisition manner corresponding to the voice information type may be acquiring a virtual resource by inputting an access in a form of voice information.

Optionally, the acquisition manner associated with the image type is inputting an image, specifically, the image input may be performed by taking an image through a camera of the electronic device, or an image may be selected by calling a local album of the electronic device after obtaining full authorization from the user to perform the image input, and the input image may be a photo and/or a video.

Optionally, different types of access information may also correspond to different interactive types, for example, the access type includes two subtypes, a text access type and a voice access type, and the preset type set may include both the text access type and the voice access type. For example, the text access type, the voice access type, and the image type are displayed in the type selection page.

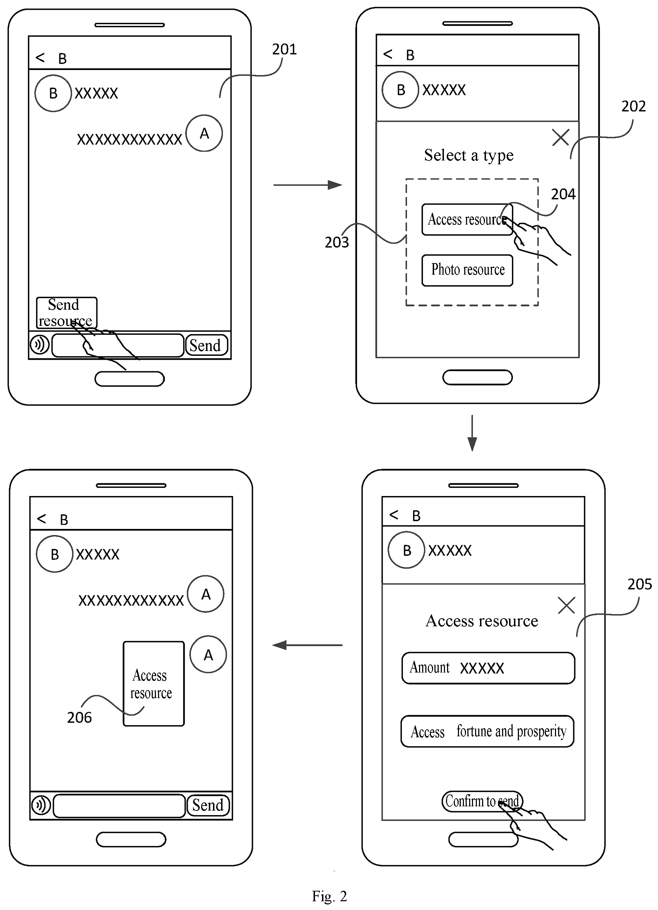

Fig. 2 is a schematic diagram of interface interaction in a page interaction method according to an embodiment of the present disclosure. As shown in Fig. 2, the virtual resource is abbreviated as a resource, and participants in a target chat include user A (the first user) and user B (the second user). User A may input an initiating operation of a resource granting event by triggering a "send resource" control in a chat page 201 of the target chat, to display a type selection page 202. A preset type set 203 is displayed in the type selection page 202, and the preset type set 203 includes at least two interactive types, such as an access resource (access type) and a photo resource (image type) as shown in the figure.

Step 102: a virtual resource setting page corresponding to a target interactive type is displayed in response to a selection operation for the target interactive type, where the target interactive type is any interactive type in the preset type set.

Exemplarily, after the preset type set is displayed to the first user, the first user may choose from the preset type set an interactive type corresponding to a virtual resource that the first user wants to send, and the target interactive type is the interactive type chosen by the first user. For example, the first user may input the selection operation for the target interactive type in a manner of clicking or the like. After the selection operation is received, the virtual resource setting page corresponding to the target interactive type is displayed. Setting items that allow the first user to perform setting, such as the number of virtual resources, the number of users allowed to acquire the virtual resources, and an association item of the target interactive type, may be displayed in the virtual resource setting page, and attribute information (such as a corresponding interactive type, a cover background image, or a candidate virtual resource template) of the virtual resources may also be displayed in the virtual resource setting page. The association item of the target interactive type, for example, an association item of the access type includes an access content setting item, and an association item of the image type includes an image requirement setting item. Optionally, there may be at least one target setting item in the virtual resource setting page, and corresponding preset item content is displayed in an item content display position associated with the target setting item. For example, for the access type, the access content setting item may be the target setting item, and corresponding preset access content may be displayed in an access content display position of the access content setting item. Optionally, an update control may be displayed in an association position (such as a right side) of the target setting item, and the update control is used to trigger an update of the preset access content. For example, initial preset access content is "Fortune and prosperity ", and if the user is not satisfied with the preset access content, the update control may be triggered to perform the update, for example, the preset access content may be updated to different preset access content "Happy New Year".

As shown in Fig. 2, assuming that user A chooses the access resource as a target interactive type 204, a virtual resource setting page 205 corresponding to the access resource is displayed. A name of the currently selected target interactive type may be displayed in the virtual resource setting page 205, and setting items, such as an amount and an access, that may be set may also be displayed in the virtual resource setting page 205.

Step 103: setting information input by the first user is received based on the virtual resource setting page.

The user may set a virtual resource that needs to be granted through the virtual resource setting page, and the setting information may be used to generate a target virtual resource to be granted.

As shown in Fig. 2, user A may input item content corresponding to setting items, such as an amount, the number of people, and an access, of the access resource to be granted as the setting information.

Step 104: a first chat message sent by the first user is displayed in the chat page, where the first chat message is for a second user in the target chat to acquire a target virtual resource based on an acquisition manner associated with the target interactive type.

Exemplarily, after completing inputting the setting information, the first user may input a confirmation operation, and in response to the confirmation operation, a virtual resource of the target interactive type is generated according to the setting information, and the first chat message with the first user as a message sender is displayed in the chat page for the second user in the target chat to acquire the target virtual resource. In the chat page on the second user side, the second user may input a related operation of the acquisition manner associated with the target interactive type, such as inputting access information or an image, in a manner of triggering the first chat message, to acquire the target virtual resource. Different virtual resources of target interactive types correspond to different acquisition manners of virtual resources.

Optionally, the first chat message includes identification information of the target virtual resource, and the target virtual resource is a virtual resource of the target interactive type generated according to the setting information. In this way, the user may more intuitively learn that the target virtual resource may be acquired based on the first chat message through the identification information. The identification information may include, for example, a resource name or a resource cover, and may also include related information such as the target interactive type or the acquisition manner.

As shown in Fig. 2, after user A clicks a "confirm to send" control, a first chat message 206 for acquiring the access resource is displayed in the chat page 201. The first chat message may also be displayed in the chat page on the user B side, so that user B may trigger input of access information based on the first chat message, to acquire the access resource granted by user A.

According to the page interaction method provided by the embodiments of the present disclosure, when a user wants to grant a virtual resource in a chat, richer interactive types such as an access type or an image type based on the virtual resource may be displayed for the user to choose from, thereby enriching interaction manners based on the virtual resource between chat members and improving the interaction effect.

In some embodiments, the displaying a virtual resource setting page corresponding to a target interactive type in response to a trigger operation for the target interactive type further includes: displaying a virtual resource setting page corresponding to an access type in response to a trigger operation for the access type, where the access type is the target interactive type; and displaying an access information type switching control in the virtual resource setting page, where the access information type switching control is for the first user to switch between the text information type and the voice information type. In this way, the user may be allowed to switch between different access information types in the virtual resource setting page, thereby improving the flexibility of virtual resource setting.

Optionally, if the interactive type displayed in the type selection page includes the access type, when the virtual resource setting page corresponding to the access type is displayed, any one of the text information type and the voice information type may be used as a default access information type, and when the user triggers the access information type switching control, the other access information type may be switched to.

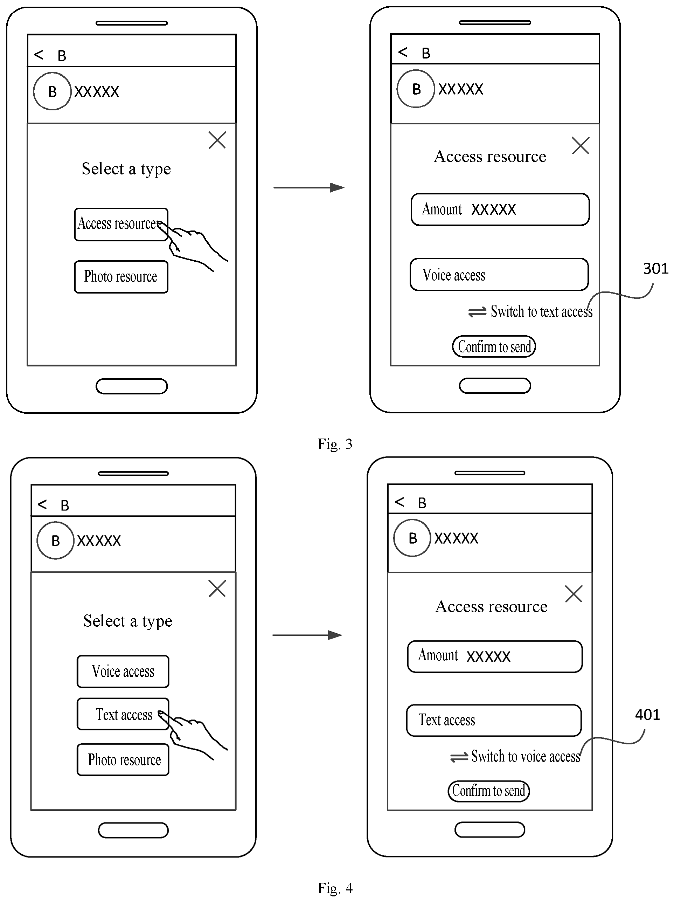

Fig. 3 is a schematic diagram of interface interaction in another page interaction method according to an embodiment of the present disclosure. As shown in Fig. 3, an access resource and a photo resource are displayed in a type selection page, and after the user chooses the access resource, a default access information type in a virtual resource setting page is a voice access. If the user wants to send a text access resource, the user may click an access information type switching control 301 to switch to the text access.

Optionally, if a text access and a voice access are divided in the type selection page, that is, the displayed interactive types include a text access type and a voice access type, after the user chooses one of the access types, when the virtual resource setting page corresponding to the access type chosen by the user is displayed, the access information type is the access type chosen by the user. When the user triggers the access information type switching control, the other access information type may be switched to without a need to roll back to the type selection page to re-choose, thereby improving efficiency and convenience.

Fig. 4 is a schematic diagram of interface interaction in another page interaction method according to an embodiment of the present disclosure. As shown in Fig. 4, a voice access, a text access, and a photo resource are displayed in a type selection page, and after the user chooses the text access, an access information type in a virtual resource setting page is the text access. If the user wants to change to sending a voice access resource, the user may click an access information type switching control 401 to switch to the voice access without a need to roll back to the type selection page to re-choose the voice access, thereby improving efficiency and convenience.

In some embodiments, the displaying a virtual resource setting page corresponding to a target interactive type in response to a trigger operation for the target interactive type further includes: displaying a virtual resource setting page corresponding to an access type in response to a trigger operation for the access type, where the access type is the target interactive type. The receiving setting information input by the first user based on the virtual resource setting page includes: receiving access setting information input by the first user based on the virtual resource setting page, where the access setting information is used to indicate content of access information input by the second user when the second user acquires the target virtual resource and/or associated content corresponding to the content of the access information input by the second user. In this way, the first user may be allowed to preset the content of the access information and/or a corresponding question input by the second user, thereby further improving the interaction effect.

Exemplarily, taking a voice access as an example, if the first user wants the second user to say "Happy fortune" when the second user receives a voice access resource, the first user may input "Happy fortune" as the access setting information, and the second user may receive the voice access resource granted by the first user by saying "Happy fortune". Optionally, the associated content may include a question, for example, if the first user wants the second user to answer the question "Name your favorite animal" when the second user receives the voice access resource, the first user may input "Name your favorite animal" as the access setting information, and the second user may receive the voice access resource granted by the first user by saying, for example, "rabbit".

In some embodiments, the displaying a virtual resource setting page corresponding to a target interactive type in response to a trigger operation for the target interactive type further includes: displaying a virtual resource setting page corresponding to an image type in response to a trigger operation for the image type, where the image type is the target interactive type; and the receiving setting information input by the first user based on the virtual resource setting page includes: receiving image setting information input by the first user based on the virtual resource setting page, where the image setting information is used to indicate at least one of a target condition, a preset theme, or a target material of an image input by the second user when the second user acquires the target virtual resource. In this way, the first user may be allowed to preset at least one of the target condition, the preset theme, or the target material of the image input by the second user, thereby further improving the interaction effect.

Exemplarily, the target condition may be understood as a condition that the input image needs to satisfy, for example, a requirement for image content, such as "Send a photo of your face" or "Take a photo of a landscape". When acquiring the target virtual resource, the second user may take or select an image that meets the requirement according to the target condition, to acquire the target virtual resource. The preset theme may be understood as that image content of the input image needs to conform to the theme. The target material may be understood as a material that needs to be included in the input image.

In some embodiments, after the displaying a first chat message sent by a first user in the chat page, the method further includes: displaying a second chat message quoting the first chat message in the chat page in response to the second user acquiring the target virtual resource based on the first chat message, where a sender of the second chat message is the second user, and the second chat message includes target access information and/or a target image input by the second user for acquiring the target virtual resource. In this way, the first user may view, in the chat page, a user who has successfully received the resource and the target access information or the target image input by the user who has successfully received the resource more intuitively and conveniently without a need to switch pages, for example, click on the resource, thereby improving interaction efficiency and effect.

Exemplarily, if the target access information or the target image input by the second user after the second user triggers the first chat message matches the acquisition manner of the target virtual resource, it may be determined that the second user acquires the target virtual resource based on the first chat message. The second chat message includes the target access information or the target image input by the second user. A display style of the target access information in the second chat message is not limited. If the target access information is a text access, text content may be displayed, and if the target access information is a voice access, a voice message control may be displayed, and voice of the target access information is played in response to the voice message control being triggered. A display style of the target image in the second chat message is not limited. If the target image is a photo, a thumbnail of the target image may be displayed, and if the target image is a video, a preview image may be displayed, the preview image may be a video cover, and a video play control may also be displayed, and the video is played in response to the video play control being triggered.

In some embodiments, the first chat message quoted in the second chat message is configured for a third user in the target chat to acquire the target virtual resource. In this way, by displaying the message quoting the first chat message, the third user in the target chat may directly acquire the target virtual resource through the first chat message quoted therein when the third user views the second chat message, without a need to find the first chat message originally sent by the first user, thereby improving interaction efficiency, and improving flexibility and convenience of target virtual resource acquisition.

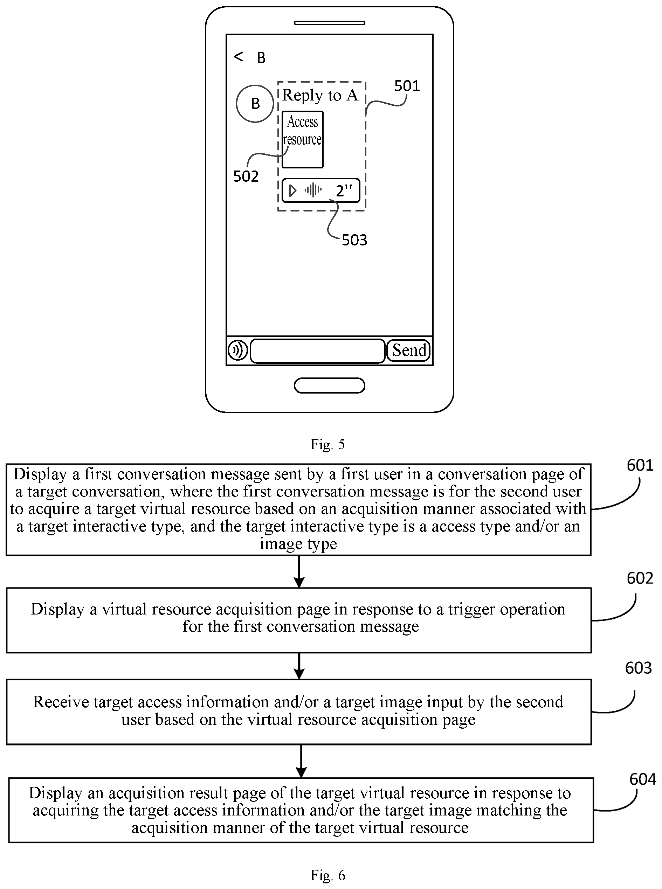

Fig. 5 is a schematic interface diagram of a page interaction method according to an embodiment of the present disclosure. As shown in Fig. 5, if user B successfully receives the access resource, a second chat message 501 sent by user B is displayed in the chat page, the second chat message 501 quotes a first chat message 502, and the second chat message 501 includes target access information 503 input by user B. If the target chat is a group chat , user C in the target chat may acquire the access resource sent by user A through the second chat message.

Fig. 6 is a schematic flowchart of another page interaction method according to an embodiment of the present disclosure. The embodiment of the present disclosure is applicable to a case of page interaction, and the method may be performed by a page interaction apparatus, which may be implemented in a form of software and/or hardware, and optionally, by an electronic device. The electronic device may be a mobile terminal such as a mobile phone, a smart watch, a tablet computer, or a personal digital assistant, or may be a device such as a personal computer or a server. The method is applied to a second user side, that is, the electronic device may be configured as a second user side device.

As shown in Fig. 6, the method includes:
step 601: a first chat message sent by a first user is displayed in a chat page of a target chat, where the first chat message is for the second user to acquire a target virtual resource based on an acquisition manner associated with a target interactive type, and the target interactive type is an access type and/or an image type.

Optionally, the acquisition manner associated with the access type includes inputting access information, the acquisition manner associated with the image type includes inputting an image, and a type of the access information includes a text information type and/or a voice information type.

In the embodiments of the present disclosure, the target chat may be a one-to-one chat or a group chat, which is not specifically limited. Participants in the target chat include the first user and the second user, the second user may be a user who currently needs to acquire a virtual resource, and any participant in the target chat may become the first user. The first user may select the access type or the image type as the interactive type corresponding to the target virtual resource. The setting information may include information input by the first user for setting, for example, the number of virtual resources, the number of users allowed to acquire the virtual resources, and the association item of the target interactive type.

Optionally, the first chat message includes identification information of the target virtual resource. In this way, the user may more intuitively learn that the target virtual resource may be acquired based on the first chat message through the identification information.

Optionally, the target virtual resource is a virtual resource of the target interactive type generated according to the setting information input by the first user. In this way, the target virtual resource is generated according to the setting of the first user, thereby improving the flexibility of the target virtual resource and enhancing the interaction effect.

Step 602: a virtual resource acquisition page is displayed in response to a trigger operation for the first chat message.

Exemplarily, the trigger operation for the first chat message may be a click operation, a long press operation, or the like. The virtual resource acquisition page may be displayed on an upper layer of the chat page, and a size of the virtual resource acquisition page may be smaller than that of the chat page.

Step 603: target access information and/or a target image input by the second user is received based on the virtual resource acquisition page.

Optionally, preset prompt information may be displayed in the virtual resource acquisition page, and the preset prompt information is used to prompt the second user to acquire the target virtual resource by inputting the access information or the image. After viewing the preset prompt information, the second user may input corresponding information to acquire the target virtual resource.

Optionally, a first input control is displayed in the virtual resource acquisition page. This step may include: acquiring the target access information input by the second user in response to a trigger operation for the first input control by the second user.

Step 604: an acquisition result page of the target virtual resource is displayed in response to acquiring the target access information and/or the target image that match the acquisition manner of the target virtual resource.

Exemplarily, taking the target virtual resource being a voice access resource as an example, the acquisition manner includes inputting voice access information, and if the user has completed inputting target voice access information, it may be determined that the input target voice access information matches the acquisition manner of the target virtual resource, and the acquisition result page of the target virtual resource is displayed, for example, the user is prompted of related information of the acquired target virtual resource, such as attribute information, including a name or the number, of the target virtual resource.

Optionally, if neither the input target access information nor the input target image matches the acquisition manner of the target virtual resource, target prompt information may be displayed, where the target prompt information is used to prompt the second user to re-input or prompt the second user that the target virtual resource acquisition fails.

According to the page interaction solution provided by the embodiments of the present disclosure, when a user wants to acquire a virtual resource granted by another user in a chat, the user may acquire the virtual resource by inputting access information or an image, thereby enriching interaction manners based on the virtual resource between chat members and improving the interaction effect.

In some embodiments, the target interactive type is the access type, and the setting information includes access setting information; and the displaying an acquisition result page of the target virtual resource in response to acquiring target access information that matches an acquisition manner of the target virtual resource includes: displaying the acquisition result page of the target virtual resource in response to acquiring the target access information that matches the access setting information. In this way, the user who grants the virtual resource may set the access, and the user who acquires the virtual resource needs to input the target access information that matches the access setting information to acquire the target virtual resource, thereby further improving the interaction effect.

Exemplarily, for the voice access type, voice recognition may be performed on target voice information input by the second user, and whether a voice recognition result matches the access setting information is determined. If the voice recognition result matches the access setting information, it may be considered that the second user may successfully acquire the target virtual resource, and the acquisition result page of the target virtual resource is displayed.

In some embodiments, the access setting information is used to indicate content of access information input by the second user when the second user acquires the target virtual resource and/or associated content corresponding to the content of the access information input by the second user. In this way, the first user may be allowed to preset the content of the access information and/or a corresponding question input by the second user, thereby further improving the interaction effect.

In some embodiments, the target interactive type is the image type; and after the displaying a virtual resource acquisition page in response to a trigger operation for the first chat message, the method further includes: displaying a second input control in the virtual resource acquisition page. The receiving a target image input by the second user based on the virtual resource acquisition page includes: displaying a preset image acquisition page in response to a trigger operation for the second input control; and receiving an image acquisition operation input by the second user based on the preset image acquisition page, and acquiring the target image corresponding to the image acquisition operation, where the image acquisition operation includes a shooting operation and/or an image selection operation, and the target image includes a picture and/or a video. In this way, the second user may be facilitated to quickly input the image, thereby improving the acquisition efficiency of the target virtual resource.

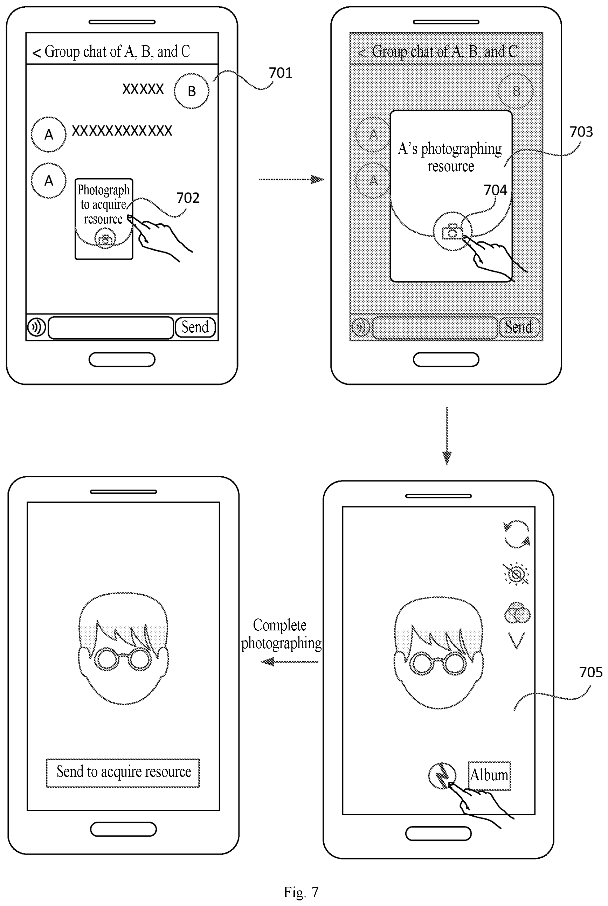

Fig. 7 is a schematic diagram of interface interaction in another page interaction method according to an embodiment of the present disclosure. As shown in Fig. 7, a first chat message 702 is displayed in a chat page 701, and user B may click the first chat message 702 to display a virtual resource acquisition page 703. A second input control 704, for example, in a camera style, is displayed in the virtual resource acquisition page 703. After user B clicks the second input control 704, a preset image acquisition page 705 is displayed, for example, a shooting page as shown in the figure, and user B may take a photo or a video by triggering a shooting button. Optionally, after the shooting is completed, an image preview page may be displayed, and if user B determines that the shot content may be used to acquire the virtual resource, user B may input a confirmation operation, such as triggering a confirmation control in the image preview page, for example, a "send to acquire resource" control in the figure.

In some embodiments, the setting information includes image setting information, and the image setting information is used to indicate at least one of a target condition, a preset theme, or a target material of an image input by the second user when the second user acquires the target virtual resource; and the displaying an acquisition result page of the target virtual resource in response to acquiring a target image that matches an acquisition manner of the target virtual resource includes: displaying the acquisition result page of the target virtual resource in response to acquiring the target image that matches the image setting information. In this way, the first user may be allowed to preset related content of the image input by the second user, and the second user inputs an image that meets the requirement to acquire the virtual resource, thereby further improving the interaction effect.

Exemplarily, if the image setting information is "Take a photo of a landscape", after the second user inputs a target image, image content of the target image may be recognized, and whether the target virtual resource is allowed to be acquired is determined according to a matching degree between a recognition result and the image setting information. If the matching degree is greater than a preset matching degree threshold, the acquisition result page of the target virtual resource is displayed. For example, whether there is landscape-related image content in the target image is determined, and if yes, it may be determined that the target image matches the image setting information.

In some embodiments, the target virtual resource is associated with a preset theme and/or the target material; and after the displaying a preset image acquisition page in response to a trigger operation for the second input control, the method further includes: loading a first preset material in the preset image acquisition page, where the first preset material is associated with the preset theme; and/or loading a second preset material in the preset image acquisition page, where the second preset material is the target material. In this way, the preset material related to the preset theme associated with the virtual resource and/or the target material associated with the virtual resource may be automatically loaded in the preset image acquisition page, thereby improving image acquisition efficiency and image quality, and further improving the interaction effect.

Exemplarily, taking the current period being the Spring Festival as an example, if the resource granted by the first user is a Spring Festival theme, preset materials such as stickers or effects related to the Spring Festival theme, such as fireworks, the character "Fu", or Chinese zodiac, may be loaded in the preset image acquisition page to create a festive atmosphere and improve the shooting quality. Exemplarily, the target material specified by the first user through inputting the image setting information may also be loaded in the preset image acquisition page, thereby further improving the interaction effect based on the virtual resource.

In some embodiments, after the displaying an acquisition result page of the target virtual resource in response to acquiring the target access information and/or the target image that match the acquisition manner of the target virtual resource, the method further includes: returning to the chat page in response to a return operation of the chat page input by the second user; and displaying a second chat message quoting the first chat message in the chat page, where a sender of the second chat message is the second user, and the second chat message includes target access information and/or a target image input by the second user. In this way, the second user may view the input target access information and/or the input target image intuitively and conveniently in the chat page, and other users in the target chat may also view the second chat message, and then view the target access information and/or the target image input by the second user, thereby improving interaction efficiency and interaction effect.

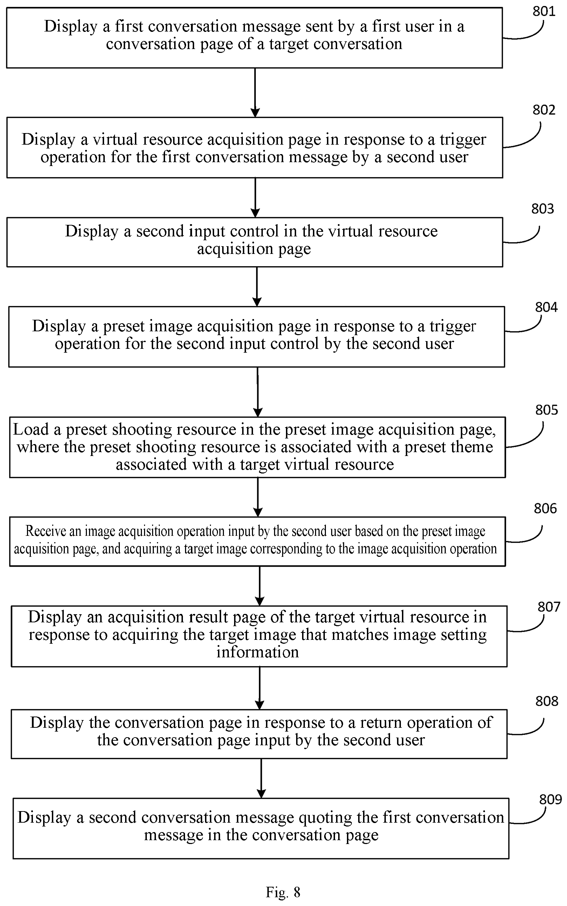

Fig. 8 is a schematic flowchart of another page interaction method according to an embodiment of the present disclosure. The embodiment of the present disclosure is optimized on the basis of various alternatives in the above embodiments, and the target interactive type being the image type is used as an example. Specifically, the method includes the following steps.

Step 801: a first chat message sent by a first user is displayed in a chat page of a target chat.

The target virtual resource is a virtual resource of a target interactive type generated according to setting information input by the first user in the target chat, the setting information includes image setting information, and the image setting information is used to indicate a target condition of an image input by the second user when the second user acquires the target virtual resource. It is assumed that the image setting information is "Send a photo of your face".

Step 802: a virtual resource acquisition page is displayed in response to a trigger operation for the first chat message by a second user.

Step 803: a second input control is displayed in the virtual resource acquisition page.

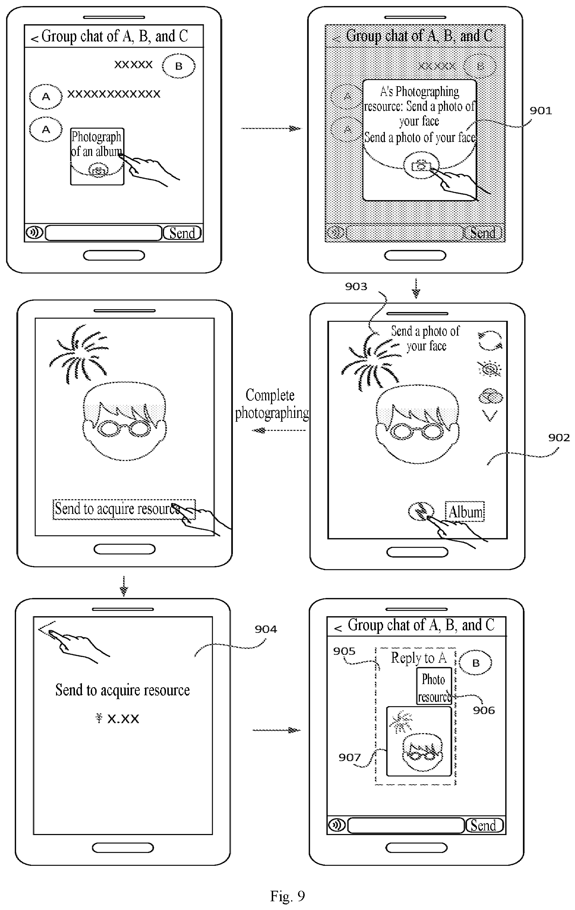

Exemplarily, preset prompt information may be displayed in the virtual resource acquisition page, and the preset prompt information is used to prompt the second user to acquire the target virtual resource by inputting an image. Fig. 9 is a schematic diagram of interface interaction in another page interaction method according to an embodiment of the present disclosure. As shown in Fig. 9, preset prompt information "Send a photo of your face" is displayed in a virtual resource acquisition page 901.

Step 804: a preset image acquisition page is displayed in response to a trigger operation for the second input control by the second user.

Optionally, the preset prompt information may also be displayed in the preset image acquisition page to facilitate the user to accurately complete image shooting.

Step 805: a preset shooting material is loaded in the preset image acquisition page, where the preset shooting material is associated with a preset theme associated with the target virtual resource.

Exemplarily, assuming that the preset theme is the Spring Festival theme, as shown in Fig. 9, after the user triggers the second input control to enter a preset image acquisition page 902 (shooting page), a firework effect 903 may be displayed in the preset image acquisition page 902.

Step 806: an image acquisition operation input by the second user is received based on the preset image acquisition page, and acquiring a target image corresponding to the image acquisition operation.

Step 807: an acquisition result page of the target virtual resource is displayed in response to acquiring the target image that matches the image setting information.

Exemplarily, assuming that the image setting information is "Send a photo of your face", it may be detected whether the target image includes a face image, and if yes, the target image may be considered to match the image setting information, and the acquisition result page of the target virtual resource is displayed. As shown in Fig. 9, after completing shooting, the user may input a confirmation operation, such as clicking "Send to acquire resource", to acquire the target image input by the user and confirm the image setting information, and if the target image matches the image setting information, an acquisition result page 904 of the target virtual resource is displayed.

Step 808: the chat page is displayed in response to a return operation of the chat page input by the second user.

Exemplarily, as shown in Fig. 9, the user may input the return operation by clicking a return button to display the chat page.

Step 809: a second chat message quoting the first chat message is displayed in the chat page.

A sender of the second chat message is the second user, and the second chat message includes the target access information or the target image input by the second user.

As shown in Fig. 9, a second chat message 905 quoting a first chat message 906 is displayed in the chat page, and the second chat message 905 includes a target image 907.

Optionally, the first chat message quoted in the second chat message is for a third user in the target chat to acquire the target virtual resource. Exemplarily, on a third user side, a virtual resource acquisition page is displayed in response to a trigger operation of the third user for the first chat message quoted in the second chat message, target access information or a target image input by the third user is received based on the virtual resource acquisition page, and an acquisition result page of the target virtual resource is displayed in response to the target access information or the target image matching the acquisition manner of the target virtual resource.

For example, on a user C side, user C fails to view the first chat message sent by user A in time, but views the second chat message sent by user B after a period of time, and learns that user A has granted a photo resource in the group chat. User C may trigger display of the virtual resource acquisition page by triggering the first chat message quoted in the second chat message, and then acquire the photo resource granted by user A by inputting the target image, instead of searching for the first chat message sent by user A through a sliding operation or the like, thereby improving acquisition efficiency of the virtual resource and interaction efficiency.

According to the page interaction method provided by the embodiments of the present disclosure, when a user wants to acquire a virtual resource granted by another user in a chat, the user may acquire the virtual resource by inputting access information or an image, thereby enriching interaction manners based on the virtual resource between chat members and improving the interaction effect. When the interactive type is the image type, a preset shooting material associated with a preset theme associated with the virtual resource is automatically loaded in the preset image acquisition page, so that the quality of the input image may be improved, and the interaction effect may be further improved. After the target virtual resource is successfully acquired, the input target image may be viewed intuitively and conveniently in the chat page, thereby improving the interaction efficiency.

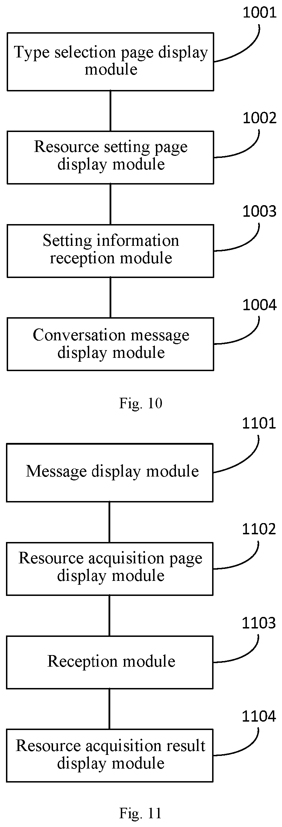

Fig. 10 is a schematic structural diagram of a page interaction apparatus according to an embodiment of the present disclosure. The apparatus is configured on a first user side. As shown in Fig. 10, the apparatus includes:
a type selection page display module 1001, configured to display a type selection page in response to an initiating operation of a virtual resource granting event input in a chat page of a target chat, where a preset type set is displayed in the type selection page, the preset type set includes at least two interactive types, the at least two interactive types are associated with acquisition manners of virtual resources, and the at least two interactive types include an access type and/or an image type;
a resource setting page display module 1002, configured to display a virtual resource setting page corresponding to a target interactive type in response to a selection operation for the target interactive type, where the target interactive type is any interactive type in the preset type set;
a setting information reception module 1003, configured to receive setting information input by the first user based on the virtual resource setting page; and
a chat message display module 1004, configured to display a first chat message sent by the first user in the chat page, where the first chat message is for a second user in the target chat to acquire a target virtual resource based on an acquisition manner associated with the target interactive type.

According to the page interaction apparatus provided by the embodiments of the present disclosure, when a user wants to grant a virtual resource in a chat, richer interactive types such as an access type or an image type based on the virtual resource may be displayed for the user to choose from, thereby enriching interaction manners based on the virtual resource between chat members and improving the interaction effect.

Optionally, the first chat message includes identification information of the target virtual resource, and the target virtual resource is a virtual resource of the target interactive type generated according to the setting information.

Optionally, the acquisition manner associated with the image type includes inputting an image.

Optionally, the resource setting page display module includes:
a first setting page display unit, configured to display a virtual resource setting page corresponding to an image type in response to a trigger operation for the image type, where the image type is the target interactive type;
and the setting information reception module is further configured to: receive image setting information input by the first user based on the virtual resource setting page, where the image setting information is used to indicate at least one of a target condition, a preset theme, or a target material of an image input by the second user when the second user acquires the target virtual resource.

Optionally, the acquisition manner associated with the access type includes inputting access information, and a type of the access information includes a text information type and/or a voice information type; and the resource setting page display module includes:
a second setting page display unit, configured to display a virtual resource setting page corresponding to an access type in response to a trigger operation for the access type, where the access type is the target interactive type; and
a switching control display unit, configured to display an access information type switching control in the virtual resource setting page, where the access information type switching control is for the first user to switch between the text information type and the voice information type.

Optionally, the resource setting page display module includes:
a third setting page display unit, configured to display a virtual resource setting page corresponding to an access type in response to a trigger operation for the access type, where the access type is the target interactive type;
and the setting information reception module is further configured to: receive access setting information input by the first user based on the virtual resource setting page, where the access setting information is used to indicate content of access information input by the second user when the second user acquires the target virtual resource and/or associated content corresponding to the content of the access information input by the second user.

Optionally, the apparatus further includes:
a first display module, configured to, after the first chat message sent by the first user is displayed in the chat page, display a second chat message quoting the first chat message in the chat page in response to the second user acquiring the target virtual resource based on the first chat message, where a sender of the second chat message is the second user, and the second chat message includes target access information and/or a target image input by the second user for acquiring the target virtual resource.

Optionally, the first chat message quoted in the second chat message is configured to be used by a third user in the target chat to acquire the target virtual resource.

Fig. 11 is a schematic structural diagram of a page interaction apparatus according to an embodiment of the present disclosure. The apparatus is configured on a second user side. As shown in Fig. 11, the apparatus includes:
a message display module 1101, configured to display a first chat message sent by a first user in a chat page of a target chat, where the first chat message is for the second user to acquire a target virtual resource based on an acquisition manner associated with a target interactive type, and the target interactive type is an access type and/or an image type;
a resource acquisition page display module 1102, configured to display a virtual resource acquisition page in response to a trigger operation for the first chat message;
a reception module 1103, configured to receive target access information or a target image input by the second user based on the virtual resource acquisition page; and
a resource acquisition result display module 1104, configured to display an acquisition result page of the target virtual resource in response to acquiring the target access information and/or the target image that match the acquisition manner of the target virtual resource.

According to the page interaction apparatus provided by the embodiments of the present disclosure, when a user wants to acquire a virtual resource granted by another user in a chat, the user may acquire the virtual resource by inputting access information or an image, thereby enriching interaction manners based on the virtual resource between chat members and improving the interaction effect.

Optionally, the first chat message includes identification information of the target virtual resource, and the target virtual resource is a virtual resource of the target interactive type generated according to setting information input by the first user.

Optionally, the acquisition manner associated with the image type includes inputting an image.

Optionally, the target interactive type is the image type; and the apparatus further includes:
an input control display module, configured to, after the virtual resource acquisition page is displayed in response to the trigger operation for the first chat message, display a second input control in the virtual resource acquisition page;
and the reception module is further configured to: display a preset image acquisition page in response to a trigger operation for the second input control; and receive an image acquisition operation input by the second user based on the preset image acquisition page, and acquire the target image corresponding to the image acquisition operation, where the image acquisition operation includes a shooting operation and/or an image selection operation, and the target image includes a picture and/or a video.

Optionally, the setting information includes image setting information, and the image setting information is used to indicate at least one of a target condition, a preset theme, or a target material of an image input by the second user when the second user acquires the target virtual resource; and the resource acquisition result display module is further configured to: display the acquisition result page of the target virtual resource in response to acquiring the target image that matches the image setting information.

Optionally, the target virtual resource is associated with a preset theme and/or a target material; and the apparatus further includes:
a material display module, configured to, after the preset image acquisition page is displayed in response to the trigger operation for the second input control, load a first preset material in the preset image acquisition page, where the first preset material is associated with the preset theme; and/or load a second preset material in the preset image acquisition page, where the second preset material is the target material.

Optionally, the apparatus further includes:
a chat page display module, configured to, after the acquisition result page of the target virtual resource is displayed in response to acquiring the target access information and/or the target image that match the acquisition manner of the target virtual resource, display the chat page in response to a return operation of the chat page input by the second user; and
a second display module, configured to display a second chat message quoting the first chat message in the chat page, where a sender of the second chat message is the second user, and the second chat message includes the target access information and/or the target image input by the second user.

Optionally, the first chat message quoted in the second chat message is configured for a third user in the target chat to acquire the target virtual resource.

The page interaction apparatus provided by the embodiments of the present disclosure may perform the page interaction method provided by any embodiment of the present disclosure, and has corresponding functional modules for performing the method and beneficial effects.

It is worth noting that the units and modules included in the above apparatus are only divided according to functional logic, but are not limited to the above division, as long as the corresponding functions may be implemented. In addition, the specific names of the functional units are only for the convenience of distinguishing from each other, and are not used to limit the protection scope of the embodiments of the present disclosure.

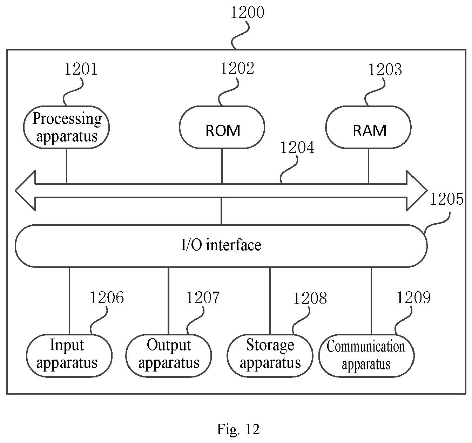

Fig. 12 is a schematic structural diagram of an electronic device according to an embodiment of the present disclosure. Reference is made to Fig. 12 below, which illustrates a schematic structural diagram of an electronic device (such as a terminal device or a server in Fig. 12) 1200 suitable for implementing the embodiments of the present disclosure. The terminal device in the embodiments of the present disclosure may include, but is not limited to, a mobile terminal such as a mobile phone, a notebook computer, a digital broadcast receiver, a PDA (personal digital assistant), a PAD (tablet computer), a PMP (portable multimedia player), and an in-vehicle terminal (e.g., an in-vehicle navigation terminal), and a stationary terminal such as a digital TV and a desktop computer. The electronic device shown in Fig. 12 is only an example, and should not impose any limitation on the function and scope of use of the embodiments of the present disclosure.

As shown in Fig. 12, the electronic device 1200 may include a processing apparatus (such as a central processing unit and a graphics processor) 1201, which may perform various appropriate actions and processing according to a program stored in a read-only memory (ROM) 1202 or a program loaded from a storage apparatus 1208 into a random access memory (RAM) 1203. In the RAM 1203, various programs and data required for operations of the electronic device 1200 are also stored. The processing apparatus 1201, the ROM 1202, and the RAM 1203 are connected to each other through a bus 1204. An editing/output (I/O) interface 1205 is also connected to the bus 1204.

Usually, the following apparatuses may be connected to the I/O interface 1205: an input apparatus 1206 including, for example, a touch screen, a touchpad, a keyboard, a mouse, a camera, a microphone, an accelerometer, and a gyroscope; an output apparatus 1207 including, for example, a liquid crystal display (LCD), a speaker, and a vibrator; a storage apparatus 1208 including, for example, a magnetic tape and a hard disk; and a communication apparatus 1209. The communication apparatus 1209 may allow the electronic device 1200 to perform wireless or wired communication with other devices to exchange data. Although Fig. 12 shows the electronic device 1200 having various apparatuses, it should be understood that not all the apparatuses shown here need to be implemented or provided. More or fewer apparatuses may be implemented or provided alternatively.

In particular, according to the embodiments of the present disclosure, the process described above with reference to the flowchart may be implemented as a computer software program. For example, the embodiments of the present disclosure include a computer program product, which includes a computer program carried on a non-transitory computer-readable medium, where the computer program contains program code for performing the method shown in the flowchart. In such an embodiment, the computer program may be downloaded and installed from a network through the communication apparatus 1209, or installed from the storage apparatus 1208, or installed from the ROM 1202. When the computer program is executed by the processing apparatus 1201, the above functions defined in the method of the embodiments of the present disclosure are executed.

Names of messages or information exchanged between multiple apparatuses in the implementations of the present disclosure are only for illustrative purposes, and are not intended to limit the scope of these messages or information.

The electronic device provided by the embodiments of the present disclosure belongs to the same inventive concept as the page interaction method provided by the above embodiments, and for technical details not described in detail in the embodiments, reference may be made to the above embodiments, and the embodiments have the same beneficial effects as the above embodiments.

An embodiment of the present disclosure provides a computer storage medium having a computer program stored thereon, where the page interaction method provided by the above embodiments is implemented when the program is executed by a processor.

An embodiment of the present disclosure provides a computer program product, including a computer program, where the page interaction method provided by the above embodiments is implemented when the program is executed by a processor.

It should be noted that the above computer-readable medium in the present disclosure may be a computer-readable signal medium or a computer-readable storage medium or any combination of the two. The computer-readable storage medium, for example, may be, but is not limited to, an electronic, magnetic, optical, electromagnetic, infrared, or semiconductor system, apparatus, or device, or any combination of the above. More specific examples of the computer-readable storage medium may include, but are not limited to: an electrical connection having one or more wires, a portable computer magnetic disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the above. In the present disclosure, the computer-readable storage medium may be any tangible medium that contains or stores a program, which may be used by or in combination with an instruction execution system, apparatus, or device. In the present disclosure, the computer-readable signal medium may include a data signal propagated on a baseband or as a part of a carrier wave, and computer-readable program code is carried therein. This propagated data signal may adopt multiple forms, including but not limited to, an electromagnetic signal, an optical signal, or any suitable combination of the above. The computer-readable signal medium may also be any computer-readable medium other than the computer-readable storage medium, and the computer-readable signal medium may send, propagate, or transmit the program used by or in combination with the instruction execution system, apparatus, or device. The program code contained on the computer-readable medium may be transmitted by any suitable medium, including but not limited to: a wire, an optical cable, a radio frequency (RF), etc., or any suitable combination of the above.

The above computer-readable medium may be contained in the above electronic device, or may exist alone without being assembled into the electronic device.

The above computer-readable medium carries one or more programs, and when the one or more programs are executed by the electronic device, the electronic device: displays a type selection page in response to an initiating operation of a virtual resource granting event input in a chat page of a target chat, where a preset type set is displayed in the type selection page, the preset type set includes at least two interactive types, the at least two interactive types are associated with acquisition manners of virtual resources, and the at least two interactive types include an access type and/or an image type; displays a virtual resource setting page corresponding to a target interactive type in response to a selection operation for the target interactive type, where the target interactive type is any interactive type in the preset type set; receives setting information input by the first user based on the virtual resource setting page; and displays a first chat message sent by the first user in the chat page, where the first chat message is for a second user in the target chat to acquire a target virtual resource based on an acquisition manner associated with the target interactive type.

Alternatively, the above computer-readable medium carries one or more programs, and when the one or more programs are executed by the electronic device, the electronic device: displays a first chat message sent by a first user in a chat page of a target chat, where the first chat message is for the second user to acquire a target virtual resource based on an acquisition manner associated with a target interactive type, and the target interactive type is an access type and/or an image type; displays a virtual resource acquisition page in response to a trigger operation for the first chat message; receives target access information and/or a target image input by the second user based on the virtual resource acquisition page; and displays an acquisition result page of the target virtual resource in response to acquiring the target access information and/or the target image that match the acquisition manner of the target virtual resource.

The computer program code for performing the operations of the present disclosure may be written in one or more programming languages or a combination thereof, where the programming languages include, but are not limited to, an object-oriented programming language such as Java, Smalltalk, and C++, and further include conventional procedural programming languages such as "C" language or similar programming languages. The program code may be executed entirely on a user computer, partly executed on a user computer, executed as an independent software package, partly executed on a user computer and partly executed on a remote computer, or entirely executed on a remote computer or a server. In the case of involving a remote computer, the remote computer may be connected to the user computer through any kind of network, including a local area network (LAN) or a wide area network (WAN), or it may be connected to an external computer (for example, connected by using Internet provided by an Internet service provider).

The flowchart and block diagrams in the drawings illustrate the possibly implemented architectures, functions, and operations of the system, the method, and the computer program product according to various embodiments of the present disclosure. In this regard, each block in the flowchart or block diagram may represent a module, a program segment, or a part of code, which contains one or more executable instructions for implementing the specified logical functions. It should also be noted that, in some alternative implementations, the functions marked in the blocks may also occur in an order different from that marked in the drawings. For example, two blocks shown in succession may actually be performed substantially in parallel, or they may sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The involved units described in the embodiments of the present disclosure may be implemented by software or by hardware. The name of a module does not constitute a limitation on the module itself under certain circumstances, for example, the setting information reception module may also be described as "a module for receiving setting information input by the first user based on the virtual resource setting page".

The functions described above herein may be at least partially performed by one or more hardware logic components. For example, without limitation, exemplary types of hardware logic components that may be used include: a field programmable gate array (FPGA), an application specific integrated circuit (ASIC), an application specific standard product (ASSP), a system on chip (SOC), a complex programmable logic device (CPLD), etc.

In the context of the present disclosure, a machine-readable medium may be a tangible medium that may contain or store a program for use by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the above. More specific examples of the machine-readable storage medium would include an electrical connection based on one or more wires, a portable computer magnetic disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the above.

The above description is only the illustration of preferred embodiments of the present disclosure and applied technical principles. Those skilled in the art should understand that the disclosure scope involved in the present disclosure is not limited to the technical solution formed by a specific combination of the above technical features, and should also cover other technical solutions formed by any combination of the above technical features or their equivalent features without departing from the above disclosure concept. For example, a technical solution formed by a replacement of the above features with technical features with similar functions disclosed in the present disclosure (but not limited thereto).

In addition, although operations are depicted in a specific order, this should not be understood as requiring these operations to be performed in the specific order shown or in sequential order. Under certain circumstances, multitasking and parallel processing may be beneficial. Similarly, although several specific implementation details are included in the above discussion, these should not be construed as limitations on the scope of the present disclosure. Certain features described in the context of separate embodiments may also be implemented in a single embodiment in combination. Conversely, various features described in the context of a single embodiment may also be implemented in multiple embodiments individually or in any suitable sub combination.

Although the subject matter has been described in a language specific to structural features and/or logical actions of the method, it should be understood that the subject matter defined in the appended claims is not necessarily limited to the specific features or actions described above. Conversely, the specific features and actions described above are only example forms for implementing the claims.

## Claims

1. A page interaction method, comprising, at a side of a first user:
displaying a type selection page in response to an initiating operation of a virtual resource granting event triggered in a chat page of a target chat, wherein a preset type set is displayed in the type selection page, the preset type set comprises at least two interactive types, the at least two interactive types are associated with acquisition manners of virtual resources, and the at least two interactive types comprise an access type and/or an image type;
displaying a virtual resource setting page corresponding to a target interactive type in response to a selection operation for the target interactive type, wherein the target interactive type is any of the interactive types in the preset type set;
receiving setting information input by the first user based on the virtual resource setting page; and
displaying a first chat message sent by the first user in the chat page, wherein the first chat message is for a second user in the target chat to acquire a target virtual resource based on an acquisition manner associated with the target interactive type.

2. The method of claim 1, wherein the first chat message comprises identification information of the target virtual resource, and the target virtual resource is a virtual resource of the target interactive type generated according to the setting information.

3. The method of claim 1, wherein the acquisition manner associated with the image type comprises inputting an image.

4. The method of claim 3, wherein the displaying a virtual resource setting page corresponding to a target interactive type in response to a trigger operation for the target interactive type comprises:
displaying a virtual resource setting page corresponding to an image type in response to a trigger operation for the image type, wherein the image type is the target interactive type;
wherein the receiving setting information input by the first user based on the virtual resource setting page comprises:
receiving image setting information input by the first user based on the virtual resource setting page, wherein the image setting information is configured to indicate at least one of a target condition, a preset theme, or a target material of an image input by the second user in response to that the second user acquiring the target virtual resource.

5. The method of claim 1, wherein the acquisition manner associated with the access type comprises inputting access information, a type of the access information comprises a text information type and/or a voice information type, and the displaying a virtual resource setting page corresponding to a target interactive type in response to a trigger operation for the target interactive type comprises:
displaying a virtual resource setting page corresponding to an access type in response to a trigger operation for the access type, wherein the access type is the target interactive type; and
displaying an access information type switching control in the virtual resource setting page, wherein the access information type switching control is for the first user to switch between the text information type and the voice information type.

6. The method of claim 1, wherein the displaying a virtual resource setting page corresponding to a target interactive type in response to a trigger operation for the target interactive type comprises:
displaying a virtual resource setting page corresponding to an access type in response to a trigger operation for the access type, wherein the access type is the target interactive type;
wherein the receiving setting information input by the first user based on the virtual resource setting page comprises:
receiving access setting information input by the first user based on the virtual resource setting page, wherein the access setting information is configured to indicate content of access information input by the second user upon the second user acquiring the target virtual resource and/or associated content corresponding to the content of the access information input by the second user.

7. The method of claim 1, wherein upon displaying a first chat message sent by the first user in the chat page, the method further comprises:
displaying a second chat message referring to the first chat message in the chat page in response to the second user acquiring the target virtual resource based on the first chat message, wherein a sender of the second chat message is the second user, and the second chat message comprises target access information and/or a target image input by the second user for acquiring the target virtual resource.

8. The method of claim 7, wherein the first chat message referred to in the second chat message is configured to be used by a third user in the target chat to acquire the target virtual resource.

9. A page interaction method, comprising, at a side of a second user:
displaying a first chat message sent by a first user in a chat page of a target chat, wherein the first chat message is for the second user to acquire a target virtual resource based on an acquisition manner associated with a target interactive type, and the target interactive type is an access type and/or an image type;
displaying a virtual resource acquisition page in response to a trigger operation for the first chat message;
receiving target access information and/or a target image input by the second user based on the virtual resource acquisition page; and
displaying an acquisition result page of the target virtual resource in response to acquiring the target access information and/or the target image matching the acquisition manner of the target virtual resource.

10. The method of claim 9, wherein the first chat message comprises identification information of the target virtual resource, and the target virtual resource is a virtual resource of the target interactive type generated according to setting information input by the first user.

11. The method of claim 9, wherein the acquisition manner associated with the image type comprises inputting an image.

12. The method of claim 9, wherein the target interactive type is an image type; and
upon displaying a virtual resource acquisition page in response to a trigger operation for the first chat message, the method further comprises:
displaying a second input control in the virtual resource acquisition page;
and the receiving a target image input by the second user based on the virtual resource acquisition page comprises:
displaying a preset image acquisition page in response to a trigger operation for the second input control; and
receiving an image acquisition operation input by the second user based on the preset image acquisition page, and acquiring the target image corresponding to the image acquisition operation, wherein the image acquisition operation comprises a shooting operation and/or an image selection operation, and the target image comprises a picture and/or a video.

13. The method of claim 12, wherein the setting information comprises image setting information, and the image setting information is configured to indicate at least one of: a target condition, a preset theme, or a target material of an image input by the second user upon the second user acquiring the target virtual resource; and
the displaying an acquisition result page of the target virtual resource in response to acquiring the target image that matches the acquisition manner of the target virtual resource comprises:
displaying the acquisition result page of the target virtual resource in response to acquiring the target image matching the image setting information.

14. The method of claim 12, wherein the target virtual resource is associated with a preset theme and/or the target material; and
upon displaying a preset image acquisition page in response to a trigger operation for the second input control, the method further comprises:
loading a first preset material in the preset image acquisition page, wherein the first preset material is associated with the preset theme; and/or
loading a second preset material in the preset image acquisition page, wherein the second preset material is the target material.

15. The method of claim 9, wherein upon displaying an acquisition result page of the target virtual resource in response to acquiring the target access information and/or the target image that match the acquisition manner of the target virtual resource, the method further comprises:
displaying the chat page in response to a return operation of the chat page input by the second user; and
displaying a second chat message quoting the first chat message in the chat page, wherein a sender of the second chat message is the second user, and the second chat message comprises the target access information and/or the target image input by the second user.

16. The method of claim 15, wherein the first chat message quoted in the second chat message is configured to be used by a third user in the target chat to acquire the target virtual resource.

17. A page interaction apparatus, configured at a side of a first user, wherein the apparatus comprises:
a type selection page display module, configured to display a type selection page in response to an initiating operation of a virtual resource granting event triggered in a chat page of a target chat, wherein a preset type set is displayed in the type selection page, the preset type set comprises at least two interactive types, the at least two interactive types are associated with acquisition manners of virtual resources, and the at least two interactive types comprise an access type and/or an image type;
a resource setting page display module, configured to display a virtual resource setting page corresponding to a target interactive type in response to a selection operation for the target interactive type, wherein the target interactive type is any of the interactive types in the preset type set;
a setting information reception module, configured to receive setting information input by the first user based on the virtual resource setting page; and
a chat message display module, configured to display a first chat message sent by the first user in the chat page, wherein the first chat message is for a second user in the target chat to acquire a target virtual resource based on an acquisition manner associated with the target interactive type.

18. A page interaction apparatus, configured at a side of a second user, wherein the apparatus comprises:
a message display module, configured to display a first chat message sent by a first user in a chat page of a target chat, wherein the first chat message is for the second user to acquire a target virtual resource based on an acquisition manner associated with a target interactive type, and the target interactive type is an access type and/or an image type;
a resource acquisition page display module, configured to display a virtual resource acquisition page in response to a trigger operation for the first chat message;
a reception module, configured to receive target access information and/or a target image input by the second user based on the virtual resource acquisition page; and
a resource acquisition result display module, configured to display an acquisition result page of the target virtual resource in response to acquiring the target access information and/or the target image matching the acquisition manner of the target virtual resource.

19. An electronic device, wherein the electronic device comprises:
one or more processors; and
a storage apparatus, configured to store one or more programs,
when the one or more programs are executed by the one or more processors, the one or more processors are caused to implement the page interaction method of any of claims 1 to 16.

20. A storage medium comprising computer executable instructions, wherein the computer executable instructions are used to perform the page interaction method of any of claims 1 to 16 when being executed by a computer processor.
